(19) Europäisches Patentamt
European Patent Office
Office européen des brevets

(11) **EP 4 787 499 A2**

(12) **EUROPEAN PATENT APPLICATION**

(43) Date of publication:
**05.08.2026 Bulletin 2026/32**

(21) Application number: **26153111.5**

(22) Date of filing: **21.01.2026**

(51) International Patent Classification (IPC):
**H01M 4/62** (2006.01)    **H01M 10/0562** (2010.01)
**H01M 4/133** (2010.01)

(52) Cooperative Patent Classification (CPC):
**H01M 4/133; H01M 4/62; H01M 4/625;
H01M 10/0562**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.02.2025 KR 20250013075**

(71) Applicant: **SAMSUNG SDI CO., LTD.
Yongin-si, Gyeonggi-do 17084 (KR)**

(72) Inventors:
• **LEE, Bohyung
17084 Yongin-si, Gyeonggi-do (KR)**
• **LEE, Jangwook
17084 Yongin-si, Gyeonggi-do (KR)**
• **OH, Seunghyun
17084 Yongin-si, Gyeonggi-do (KR)**
• **PARK, Sungwoo
17084 Yongin-si, Gyeonggi-do (KR)**
• **HAN, Jiwon
17084 Yongin-si, Gyeonggi-do (KR)**

(74) Representative: **Michalski Hüttermann & Partner
mbB
Kaistraße 16A
40221 Düsseldorf (DE)**

(54) **NEGATIVE ELECTRODE FOR ALL-SOLID-STATE BATTERY AND ALL-SOLID-STATE BATTERY INCLUDING THE SAME**

(57)    The present disclosure relates to a negative electrode for an all-solid-state battery. The negative electrode includes a negative electrode current collector and a coating layer on the negative electrode current collector. The coating layer includes a carbon material, a metal, and a dielectric material. An amount of the metal is less than an amount of the carbon material, an amount of a dielectric material is less than an amount of the metal, and an amount of the dielectric material is in a range of about 1 wt% to about 10 wt% relative to a total weight of the coating layer.

FIG. 3

EP 4 787 499 A2

**Description**

CROSS-REFERENCE TO RELATED APPLICATION

This application claims priority to Korean Patent Application No. 10-2025-0013075 filed on February 3, 2025 in the Korean Intellectual Property Office.

BACKGROUND

The present disclosure relates to a negative electrode for an all-solid-state battery, and an all-solid-state battery including the negative electrode.

With increasing industrial demand, the development of high-energy-density and highly safe batteries is growing. Lithium-ion batteries, for instance, are commercialized not only for consumer electronics and communication devices, but also in the automotive industry. In automotive applications, battery safety is of paramount importance due to the direct impact thereof on human safety.

All-solid-state batteries, which include a solid electrolyte instead of a liquid electrolyte, appear to be a promising alternative. Unlike conventional lithium-ion batteries that contain flammable organic solvents, all-solid-state batteries significantly reduce the risk of fire or explosion, even in the event of a short circuit. As a result, all-solid-state batteries offer a substantial improvement in safety compared to lithium-ion batteries utilizing liquid electrolytes.

SUMMARY

An example embodiment of the present disclosure includes a negative electrode for an all-solid-state battery capable of inducing uniform deposition and precipitation of lithium.

An example embodiment of the present disclosure includes an all-solid-state battery which reduces or prevents occurrence of short circuit due to lithium dendrite, and has improved cycle-life characteristics by including the negative electrode.

According to an example embodiment of the present disclosure, a negative electrode for an all-solid-state battery may include a negative electrode current collector, and a coating layer on the negative electrode current collector, wherein the coating layer includes a carbon material, a metal, and a dielectric material. An amount of the metal is less than an amount of the carbon material, an amount of the dielectric material is less than the amount of the metal, and the amount of the dielectric material may be in a range of 1 wt% to 10 wt% relative to a total weight of the coating layer.

According to an example embodiment of the present disclosure, a negative electrode for an all-solid-state battery may include a negative electrode current collector and a coating layer on the negative electrode current collector, wherein the coating layer includes a carbon material, a metal, and a dielectric material. An amount of the metal is less than an amount of the carbon material, an amount of the dielectric material is less than an amount of the metal, and a dielectric constant ($\varepsilon$) of the dielectric material may be in a range of about 10 to about $10^4$.

According to an example embodiment of the present disclosure, an all-solid-state battery may include a positive electrode layer, a negative electrode layer, and a solid electrolyte layer between the positive electrode layer and the negative electrode layer, wherein the negative electrode layer includes the negative electrode described above.

BRIEF DESCRIPTION OF DRAWINGS

FIG. 1 is a cross-sectional view illustrating an all-solid-state battery according to an example embodiment of the present disclosure.

FIG. 2 is a cross-sectional view illustrating an all-solid-state battery according to another example embodiment of the present disclosure.

FIG. 3 is a cross-sectional view illustrating a negative electrode for an all-solid-state battery according to an example embodiment of the present disclosure, and is an enlarged view of a region "M" in FIG. 1.

FIGS. 4A to 4C are diagrams for explaining a negative electrode for an all-solid-state battery according to a comparative example of the present disclosure.

FIGS. 5A to 5C are diagrams for explaining a negative electrode for an all-solid-state battery according to an example embodiment of the present disclosure.

FIGS. 6A and 6B are each images showing EDS mapping results for a cross section and a surface of a negative electrode for an all-solid-state battery of Example 2.

FIGS. 7A and 7B are each images showing EDS mapping results for a cross section and a surface of a negative electrode for an all-solid-state battery of Example 3.

DETAILED DESCRIPTION

To fully understand the configuration and effects of the present disclosure, some example embodiments are described with reference to the accompanying drawings. However, the present disclosure is not limited to the following example embodiments and may be implemented in various forms. The example embodiments are provided solely to illustrate the present disclosure and to enable those skilled in the art to fully understand its scope.

In this description, when an element is described as being "on" another element, the element may be "directly on" the other element, or one or more intervening elements may be present therebetween. In the drawings, certain thicknesses may be exaggerated to better illustrate technical details. Throughout the specification, like reference numerals indicate like elements.

The example embodiments described herein may be illustrated using sectional and/or plan views, which are presented as idealized examples of the present disclosure. The thicknesses of layers and regions in the drawings may be exaggerated for clarity. The regions shown in the drawings are for illustrative purposes and should not be construed as limiting the scope of the present disclosure. Although terms such as "first," "second," and "third" may be used to describe various elements, these terms are merely for distinction and do not imply any particular order or hierarchy. The example embodiments described and illustrated herein include complementary variations.

The terms used in this description serve only to explain various embodiments and are not intended to limit the present disclosure. Unless explicitly stated otherwise, singular forms may also include plural forms. The terms "comprises/includes" and "comprising/including" do not exclude the presence or addition of one or more other components.

In this description, the phrase "combination thereof" may refer to a mixture, a stack, a composite, a copolymer, an alloy, a blend, or a reaction product.

Unless otherwise specifically defined, the term "particle diameter" refers to an average particle diameter. The particle diameter may represent the median particle size (D50), which corresponds to the diameter of particles at 50 vol% in a cumulative particle size distribution. The average particle diameter (D50) can be measured using widely known methods, such as, e.g., a particle size analyzer, transmission electron microscope (TEM) imaging, or scanning electron microscope (SEM) imaging. Alternatively, dynamic light scattering may be used, where particle counts within size ranges are analyzed to calculate the average particle diameter (D50). Additionally, a laser scattering method may be employed, in which a target particle is dispersed in a solvent, introduced into a laser scattering particle measurement device (e.g., MT3000 from Microtrac, Inc.), irradiated with ultrasonic waves at 28 kHz and 60 W, and subsequently analyzed to determine the D50 value based on a 50% cumulative particle size distribution.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1 %.

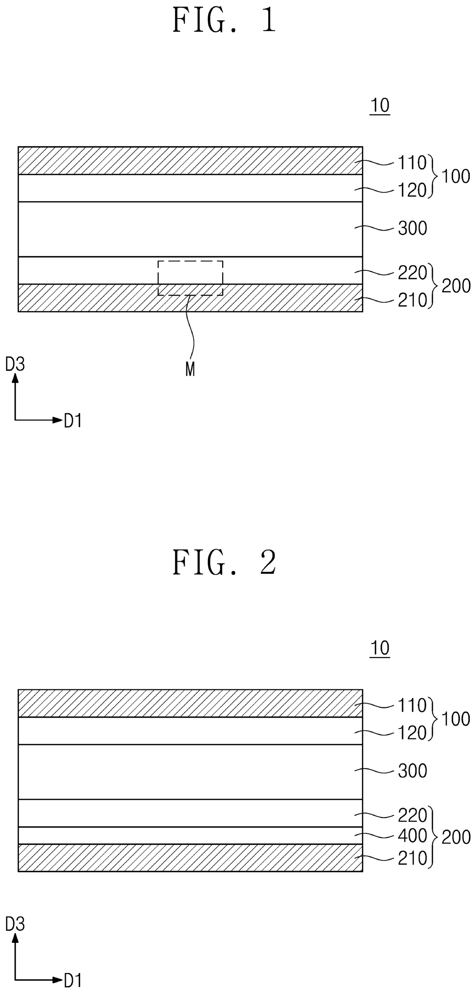

FIG. 1 is a cross-sectional view of an all-solid-state battery according to an example embodiment of the present disclosure.

Referring to FIG. 1, an all-solid-state battery 10 according to an example embodiment may include a positive electrode layer 100, a negative electrode layer 200 facing the positive electrode layer 100, and a solid electrolyte layer 300 disposed between the positive electrode layer 100 and the negative electrode layer 200. The present disclosure, however, is not limited thereto, and the all-solid-state battery 10 may further include an additional functional layer, for example, an adhesion enhancement layer, disposed between the positive electrode layer 100 and the solid electrolyte layer 300, or between the negative electrode layer 200 and the solid electrolyte layer 300.

The positive electrode layer 100 of an example embodiment of the present disclosure may include a positive electrode current collector 110 and a positive electrode active material layer 120 disposed on the positive electrode current collector 110. The positive electrode active material layer 120 may include a positive electrode active material, a solid electrolyte, a conductive material, and a binder.

The positive electrode current collector 110 may provide a reference surface on which the positive electrode active material layer 120 is disposed. The positive electrode current collector 110 may include a plate or foil including, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

Differently from that shown in FIG. 1, in another example embodiment of the present disclosure, the positive electrode current collector 110 can be omitted. Although not shown, in order to increase adhesion between the positive electrode collector 110 and the positive electrode active material layer 120, a carbon layer having a thickness in a range of about 0.1 μm to about 4 μm may further be disposed between the positive electrode current collector 110 and the positive electrode active material layer 120.

The positive electrode active material may be or include a material that can reversibly absorb and desorb lithium ions. For example, the positive electrode active material may include at least one of a lithium transition metal oxide (e.g.,

lithium cobalt oxide (LCO), lithium nickel oxide, lithium nickel cobalt oxide, lithium nickel-cobalt-aluminum oxide (NCA), lithium nickel-cobalt-manganese oxide (NCM), lithium manganate, and lithium iron phosphate), nickel sulfide, copper sulfide, lithium sulfide, iron oxide, or vanadium oxide, but the present disclosure is not limited thereto. The positive electrode active material may be used alone, or in a mixture of two or more substances.

The lithium transition metal oxide may be or include, for example, a compound represented by one of $Li_aA_{1-b}B_bD_2$ (where $0.90 \leq a \leq 1$, and $0 \leq b \leq 0.5$), $Li_aE_{1-b}B_bO_{2-c}D_c$ (where $0.90 \leq a \leq 1$, $0 \leq b \leq 0.5$, and $0 \leq c \leq 0.05$), $L1E_{2-b}B_bO_{4-c}D_c$ (where $0 \leq b \leq 0.5$, and $0 \leq c \leq 0.05$), $Li_aNi_{1-b-c}Co_bB_cD_\alpha$ (where $0.90 \leq a \leq 1$, $0 \leq b \leq 0.5$, $0 \leq c \leq 0.05$, and $0 < \alpha < 2$), $Li_aNi_{1-b-c}Co_bB_cO_{2-\alpha}F_\alpha$ (where $0.90 \leq a \leq 1$, $0 \leq b \leq 0.5$, $0 \leq c \leq 0.05$, and $0 < \alpha < 2$), $Li_aNi_{1-b-c}Mn_bB_cD_\alpha$ (where $0.90 \leq a \leq 1$, $0 \leq b \leq 0.5$, $0 \leq c \leq 0.05$, and $0 < \alpha \leq 2$), $Li_aNi_{1-b-c}Mn_bBcO_{2-\alpha}F_\alpha$ (where $0.90 < a \leq 1$, $0 \leq b \leq 0.5$, $0 \leq c \leq 0.05$, and $0 < \alpha \leq 2$), $Li_aNi_bE_cG_dO_2$ (where $0.90 \leq a \leq 1$, $0 \leq b \leq 0.9$, $0 \leq c \leq 0.5$, and $0.001 \leq d \leq 0.1$), $Li_aNi_bCo_cMn_dGeO_2$ (where $0.90 \leq a \leq 1$, $0 \leq b \leq 0.9$, $0 \leq c \leq 0.5$, $0 \leq d \leq 0.5$, and $0.001 \leq e \leq 0.1$), $Li_aNiG_bO_2$ (where $0.9 \leq a \leq 1$ and $0.001 \leq b \leq 0.1$), $Li_aCoG_bO_2$ (where $0.90 \leq a \leq 1$, and $0.001 \leq b \leq 0.1$), $Li_aMnG_bO_2$ (where $0.90 \leq a \leq 1$, and $0.001 \leq b \leq 0.1$), $Li_aMn_2GbO_4$ (where $0.90 \leq a \leq 1$, and $0.001 \leq b \leq 0.1$), $QO_2$, $QS_2$, $LiQS_2$, $V_2O_5$, $LiV_2O_5$, $LiIO_2$, $LiNiVO_4$, $Li_{3-f}J_2(PO_4)_3$ (where $0 \leq f \leq 2$), $Li_{3-f}Fe_2(PO_4)_3$ (where $0 \leq f \leq 2$), and $LiFePO_4$. In the compounds above, "A" may be or include at least one of Ni, Co, Mn, or a combination thereof, "B" may be or include at least one of Al, Ni, Co, Mn, Cr, Fe, Mg, Sr, V, a rare earth element, or a combination thereof, "D" may be or include at least one of O, F, S, P, or a combination thereof, "E" may be or include at least one of Co, Mn, or a combination thereof, "F" may be or include at least one of F, S, P, or a combination thereof, "G" may be or include at least one of Al, Cr, Mn, Fe, Mg, La, Ce, Sr, V, or a combination thereof, "Q" may be or include at least one of Ti, Mo, Mn, or a combination thereof, "I" may be or include at least one of Cr, V, Fe, Sc, Y, or a combination thereof, and "J" may be or include at least one of V, Cr, Mn, Co, Ni, Cu, or a combination thereof.

The positive electrode active material may include, for example, a lithium salt of a transition metal oxide having a layered rock salt type structure among the above-described lithium transition metal oxide. The term "layered rock salt type structure" may be refer to a structure in which an oxygen atom layer and a metal atom layer are alternately and regularly arranged in a <111> direction of a cubic rock salt type structure, where each atom layer forms a two-dimensional plane. The term "cubic rock salt type structure" may refer to a sodium chloride (NaCl) type structure, which is a type of crystal structure, and for example, has a structure in which face centered cubic lattices (FCCs) each formed of cations and anions are arranged displaced from each other by 1/2 (half) of a ridge of a unit lattice. The lithium transition metal oxide having such the layered rock salt type structure may be or include, for example, a ternary lithium transition metal oxide such as $LiNi_xCo_yAl_zO_2$ (NCA) or $LiNi_xCo_yMn_zO_2$ (NCM) (where $0 < x < 1$, $0 < y < 1$, $0 < z < 1$, and $x+y+z=1$). When the positive electrode active material includes a ternary lithium transition metal oxide having the layered rock salt type structure, the all-solid-state battery 10 may have increased energy density and improved thermal stability.

The compound included in the positive electrode active material may be covered with a coating layer (not shown). The positive electrode active material may be used in a mixture of the compound and a compound to which the coating layer is added. The coating layer added to a surface of the positive electrode active material may include, for example, at least one of oxide, hydroxide, oxyhydroxide, oxycarbonate, or hydroxycarbonate of coating elements described below. The compound that constitutes the coating layer may be amorphous or crystalline. The coating element included in the coating layer may include at least one of Mg, Al, Co, K, Na, Ca, Si, Ti, V, Sn, Ge, Ga, B, As, Zr, or a mixture thereof. The coating layer may include, for example, $Li_2O$-$ZrO_2$ (LZO). A method for forming the coating layer may be determined within any methods that do not adversely affect physical properties of the positive electrode active material. The method for forming the coating layer may include, for example, spray coating or immersion.

When the positive electrode active material includes nickel (Ni) as a ternary lithium transition metal oxide such as NCA or NCM, a capacity density of the all-solid-state battery 10 may increase to reduce metal elution from the positive electrode active material in a charged state. Therefore, the all-solid-state battery 10 may improve in cycle characteristics in a charged state. The term "cycle characteristics" may refer to characteristics that indicate a degree to which the all-solid-state battery 10 is degraded due to charge and discharge. For example, the all-solid-state-battery 10 with a high cycle characteristics may degrade less due to charge and discharge, while the all-solid-state battery 10 with low cycle characteristics may degrade more due to charge and discharge.

The positive electrode active material may have, for example, a substantially spherical or oval particle shape. There is no limitation on a particle diameter and an amount of the positive electrode active material.

The solid electrolyte may include a sulfide-based solid electrolyte with desired or improved lithium ionic conductivity. The sulfide-based solid electrolyte may include, for example, at least one of $Li_2S$-$P_2S_5$, $Li_2S$-$P_2S_5$-$LiX$ (where X is or includes a halogen element), $Li_2S$-$P_2S_5$-$Li_2O$, $Li_2S$-$P_2S_5$-$Li_2O$-$LiI$, $Li_2S$-$SiS_2$, $Li_2S$-$SiS_2$-$LiI$, $Li_2S$-$SiS_2$-$LiBr$, $Li_2S$-$SiS_2$-$LiCl$, $Li_2S$-$SiS_2$-$B_2S_3$-$LiI$, $Li_2S$-$SiS_2$-$P_2S_5$-$LiI$, $Li_2S$-$B_2S_3$, $Li_2S$-$P_2S_5$-$Z_mS_n$ (where m, n are each a positive integer, and "Z" is or includes one of Ge, Zn, or Ga), $Li_2S$-$GeS_2$, $Li_2S$-$SiS_2$-$Li_3PO_4$, $Li_2S$-$SiS_2$-$Li_pMO_q$ (where p, q are each a positive integer, and "M" is or includes one of P, Si, Ge, B, Al, Ga, or In), $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$).

The sulfide-based solid electrolyte may be or include an argyrodite-type compound including, for example, at least one of $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). For example, the sulfide-based solid electrolyte may be or include an argyrodite-type compound including at least one of $Li_6PS_5Cl$,

$Li_6PS_5Br$, and $Li_6PS_5I$.

Alternatively, the sulfide-based solid electrolyte may be or include an argyrodite-type compound including $Li_{7-a-c}M_aPS_{6-c}X_c$ (where $0 \leq a \leq 2$, and $0 \leq c \leq 2$). In the chemical formula above, X may be or include at least one of F, Br, Cl, or a combination thereof. M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

The argyrodite-type solid electrolyte may have a density in a range of about 1.5 g/cc to about 2.0 g/cc. As the argyrodite-type solid electrolyte has a density of 1.5 g/cc or more, it may be possible to decrease an internal resistance of the all-solid-state battery, and to reduce or prevent the solid electrolyte layer from penetration and short-circuit caused by lithium dendrite formation. The solid electrolyte may have an elastic modulus in a range of, for example, about 15 GPa to about 35 GPa.

The solid electrolyte in the positive electrode active material layer 120 may have an average particle diameter (D50) that is less than the average particle diameter of a solid electrolyte in the solid electrolyte layer 300 which is discussed below. For example, the average particle diameter (D50) of the solid electrolyte in the positive electrode active material layer 120 may be in a range of about 90% or less, about 80% or less, about 70% or less, about 60% or less, about 50% or less, about 40% or less, about 30% or less, or about 20% or less of the average particle diameter (D50) of the solid electrolyte in the solid electrolyte layer 300. The average particle diameter (D50) may be a median diameter measured with a laser-type particle size distribution analyzer.

The positive electrode active material layer 120 may include a conductive material. The conductive material may have conductivity without causing an undesirable chemical change of the all-solid-state battery 10 to increase conductivity of the positive electrode active material and the solid electrolyte. The conductive material may include a carbon-based material. The conductive material may include, for example, at least one of graphite, carbon black, acetylene black, carbon nanofiber, carbon nanotube, or a combination thereof.

The positive electrode active material layer 120 may further include a binder. The binder may combine the positive electrode active material, the solid electrolyte, and the conductive material in the positive electrode active material layer 120 with each other. The binder may improve adhesion between the positive electrode current collector 110 and the positive electrode active material layer 120. For example, the binder may include at least one of polyvinylidene fluoride, styrene-butadiene rubber (SBR), polytetrafluoroethylene, vinylidene fluoride/hexafluoropropylene copolymer, polyacrylonitrile, polymethylmethacrylate, or a combination thereof.

Based on 100 parts by weight of a total of the positive electrode active material, the solid electrolyte, the conductive material, and the binder, the positive electrode active material may be included in amount in a range of about 85 parts by weight to about 92 parts by weight in the positive electrode active material layer 120. Based on 100 parts by weight of a total of the positive electrode active material, the solid electrolyte, the conductive material, and the binder, the binder may be included in an amount in a range of about 0.5 parts by weight to about 1.5 parts by weight.

Based on 100 parts by weight of the solid electrolyte, the conductive material may be included in amount in a range of about 1 part by weight to about 50 parts by weight in the positive electrode active material layer 120. When the conductive material is included in an amount that is less than 1 part by weight relative to 100 parts by weight of the solid electrolyte, a proportion of the conductive material may decrease to reduce an electrical conductivity of the positive electrode active material layer 120. When the conductive material is included in an amount that is greater than about 50 parts by weight relative to 100 parts by weight of the solid electrolyte, a proportion of the conductive material may excessively or substantially increase to cause incomplete formation of a coating layer that covers a surface of the solid electrolyte.

The positive electrode active material layer 120 may further include an additive such as, e.g., at least one of a filler, a coating agent, a dispersant, and an ionic conductivity agent, in addition to the positive electrode active material, the solid electrolyte, the conductive material, and the binder.

The solid electrolyte layer 300 may be provided between the positive electrode layer 100 and the negative electrode layer 200. The solid electrolyte layer 300 may include a sulfide-based solid electrolyte with desired or improved lithium ionic conductivity. The solid electrolyte in the solid electrolyte layer 300 may be the same as, or different from, any one of the materials included in the solid electrolyte in the positive electrode active material layer 120 described above.

The solid electrolyte layer 300 according to an example embodiment may include a sulfide-based solid electrolyte. The sulfide-based solid electrolyte may be prepared by performing, for example, a melt quenching method or a mechanical milling method on a starting raw material such as $Li_2S$, or $P_2S_5$. In addition, the resultant may be thermally treated after the treatment mentioned above. The solid electrolyte may be in an amorphous state, crystalline state, or a mixed state thereof. For example, the solid electrolyte may include at least one of sulfur (S), phosphorus (P), and lithium (Li) among component elements included in the sulfide-based solid electrolyte described above. For example, the solid electrolyte may be or include a material including $Li_2S-P_2S_5$. When a material including $Li_2S-P_2S_5$ is utilized as a sulfide-based solid electrolyte material of the solid electrolyte, a mixing molar ratio of $Li_2S$ and $P_2S_5$ may be in a range of about 50:50 to about 90:10.

The sulfide-based solid electrolyte may be or include an argyrodite-type compound including, for example, at least one of $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). For example, the sulfide-based solid electrolyte may be or include an argyrodite-type compound including at least one of $Li_6PS_5Cl$, $Li_6PS_5Br$, and $Li_6PS_5I$.

Alternatively, the sulfide-based solid electrolyte may be or include an argyrodite-type compound including $Li_{7-a}M_aPS_{6-c}X_c$ (where $0 \leq a \leq 2$, and $0 \leq c \leq 2$). In the chemical formula above, X may be or include at least one of F, Br, Cl, or a combination thereof. M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

The argyrodite-type solid electrolyte may have a density in a range of about 1.5 g/cc to about 2.0 g/cc. As the argyrodite-type solid electrolyte has a density of 1.5 g/cc or more, it may be possible to decrease an internal resistance of the all-solid-state battery 10, and to reduce or prevent a solid electrolyte layer from penetration and short-circuit caused by lithium dendrite formation. The solid electrolyte may have an elastic modulus in a range of about 15 GPa to about 35 GPa.

The solid electrolyte layer 300 may further include a binder. The binder included in the solid electrolyte layer 300 may include, for example, at least one of styrene-butadiene rubber (SBR), polytetrafluoroethylene, polyvinylidene fluoride, and polyethylene, but the present disclosure is not limited thereto. The binder of the solid electrolyte layer 300 may be the same as, or different from, the binder of the positive electrode active material layer 120 or the binder of a coating layer 220 described below.

The negative electrode layer 200 may include a negative electrode current collector 210 and a coating layer 220. Although not shown, a carbon layer may further be included to increase adhesion between the coating layer 220 and the solid electrolyte layer 300.

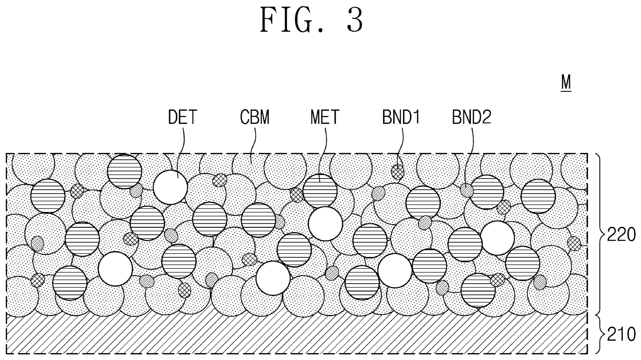

The negative electrode layer 200 is described below in detail with reference to FIG. 3.

FIG. 2 is a cross-sectional view of an all-solid-state battery according to another example embodiment of the present disclosure.

Referring to FIG. 2, the negative electrode layer 200 of the all-solid-state battery 10 may further include a lithium metal layer 400 between the negative electrode current collector 210 and the coating layer 220. The lithium metal layer 400 may further increase a thickness thereof during charging of the all-solid-state battery 10. The coating layer 220 constitutes a protective layer of the lithium metal layer 400, and may reduce or inhibit the growth of lithium dendrites from the lithium metal layer 400.

The lithium metal layer 400 may be or include a thin metal film including lithium or lithium alloy. The lithium alloy may include, for example, at least one of Li-Al alloy, Li-Sn alloy, Li-In alloy, Li-Ag alloy, Li-Au alloy, Li-Zn alloy, Li-Ge alloy, and Li-Si alloy, but the present disclosure is not limited thereto, and any suitable lithium alloys may be used. The lithium metal layer 400 may include lithium or one of the alloys described above. Alternatively, the lithium metal layer 400 may include various kinds of alloys.

For example, a thickness of the lithium metal layer 400 may be in a range of about 1 $\mu$m to about 500 $\mu$m, about 1 $\mu$m to about 200 $\mu$m, about 1 $\mu$m to about 150 $\mu$m, about 1 $\mu$m to about 100 $\mu$m, or about 1 $\mu$m to about 50 $\mu$m, but the present disclosure is not limited thereto. When the thickness of the lithium metal layer 400 is excessively or substantially thin, e.g., lower than about 1 $\mu$m, it may be difficult to constitute a lithium reservoir by the lithium metal layer 400. When the thickness of the lithium metal layer 400 is excessively or substantially large, e.g., higher than about 500 $\mu$m, the mass and volume of the all-solid-state battery 10 may increase, and the cycle characteristics thereof may rather deteriorate.

When the lithium metal layer 400 is deposited by charging after assembling the all-solid-state battery 10, the energy density of the all-solid-state battery 10 may be increased because the all-solid-state battery 10 does not include the lithium metal layer 400 at the time of assembling. When the all-solid-state battery 10 is charged, the charge capacity of the coating layer 220 may be exceeded. That is, the coating layer 220 is overcharged. In an early stage of charging, lithium may be absorbed in the coating layer 220. When charging is performed in excess of the capacity of the coating layer 220, for example, lithium may be deposited (or plated) between the coating layer 220 and the negative electrode current collector 210. The lithium metal layer 400 may be formed by the deposited lithium.

The lithium metal layer 400 may be primarily composed of or include lithium (i.e., metal lithium). During discharge, lithium in the lithium metal layer 400 may be ionized and migrate to the positive electrode layer 100. In other words, lithium may be used as a negative electrode active material in the all-solid-state battery 10. In addition, since the coating layer 220 covers the lithium metal layer 400, the coating layer 220 may protect the lithium metal layer 400 and reduce or suppress precipitation growth of lithium dendrites. Therefore, the coating layer 220 may reduce or suppress a short circuit and a decrease in capacity of the all-solid-state battery 10, and improve the cycle characteristics thereof.

When the lithium metal layer 400 is formed by charging after assembling of the all-solid-state battery 10, the negative electrode layer 200, for example, a region between the negative electrode current collector 210 and the coating layer 220, may be or include a Li-free region that does not include lithium (Li) in an initial state or a state after complete discharge of the all-solid-state battery 10.

**Negative Electrode for All-Solid-State Battery**

FIG. 3 is a cross-sectional view illustrating a negative electrode for an all-solid-state battery according to an example embodiment of the present disclosure, and is an enlarged view in which a region "M" of FIG. 1.

Referring to FIG. 3, a negative electrode for an all-solid-state battery (hereinafter, referred to as a negative electrode layer 200) according to an example embodiment of the present disclosure may include a negative electrode current collector 210 and a coating layer 220 on the negative electrode current collector 210.

The negative electrode current collector 210 may provide a reference surface on which the coating layer 220 is disposed. The negative electrode current collector 210 may include a material that does not react with lithium such as, for example, a material that does not form both an alloy or a compound with lithium. For example, the negative electrode current collector 210 may include at least one of copper (Cu), stainless steel, titanium (Ti), iron (Fe), cobalt (Co), and nickel (Ni) or an alloy thereof.

For example, a thickness of the negative electrode current collector 210 may be in a range of about 1 $\mu$m to about 20 $\mu$m, about 5 $\mu$m to about 15 $\mu$m, about 7 $\mu$m to about 10 $\mu$m.

The negative electrode current collector 210 may be composed of or include one of the metals described above, an alloy of two or more metals described above, or a coating material. The negative electrode current collector 210 may have, for example, a plate or a foil shape. In an example embodiment, the negative electrode current collector 210 may be omitted.

The coating layer 220 may allow lithium metal to grow between the coating layer 220 and the negative electrode current collector 210 during charging of the all-solid-state battery. Alternatively, the coating layer 220 may form an alloy with lithium or allow lithium metal to grow therein during charging of the all-solid-state battery. The coating layer 220 may constitute a protective layer of lithium metal and may reduce or suppress formation and growth of lithium dendrites.

In other words, the coating layer 220 may refer to a layer that helps lithium ions released from the positive electrode active material to migrate toward the negative electrode layer 200 and precipitate on a surface of the negative electrode current collector 210 during charge and discharge of the all-solid-state battery. For example, a lithium metal layer 400 (see FIG. 2) may be formed between the negative electrode current collector 210 and the coating layer 220 by precipitation of lithium ions. The lithium metal layer may constitute a negative electrode active material, and such a negative electrode is referred to as a precipitation-type negative electrode.

The coating layer 220 may include a carbon material CBM, a metal MET, and a dielectric material DET. The coating layer 220 may include, for example, a mixture of the carbon material CBM, the metal MET and the dielectric material DET. The carbon material CBM, the metal MET and the dielectric material DET may be dispersed within coating layer 220.

The carbon material CBM may include at least one of amorphous carbon, crystalline carbon, or a combination thereof.

For example, the amorphous carbon may include at least one of carbon black, acetylene black, Denka Black, furnace black, ketjen black, activated carbon, or a combination thereof. In an example embodiment, the carbon material CBM may include carbon black.

For example, the crystalline carbon may include at least one of natural graphite, artificial graphite, carbon nanotubes, graphene, or a combination thereof. The crystalline carbon may be non-shaped, plate-shaped, flake-shaped, sphere-shaped, or fiber-shaped.

The carbon material CBM may be or include a single particle, or an assembly in the form of secondary particles in which primary particles are assembled, or a combination thereof.

When the carbon material CBM is the single particle, the carbon material CBM may have a nano-size of particle diameter in a range of about 100 nm or less, for example, in a range of about 10 nm to about 100 nm. For example, the particle size of the single particle may be about 10 nm to about 60 nm.

When the carbon material CBM is the assembly, a particle diameter of the primary particles may be in a range of about 20 nm to about 100 nm, and a particle diameter of the secondary particles may be in a range of about 0.1 $\mu$m to about 20 $\mu$m.

For example, the particle size of the primary particles may be in a range of about 20 nm or more, about 30 nm or more, about 40 nm or more, about 50 nm or more, about 60 nm or more, about 70 nm or more, about 80 nm or more, or about 90 nm or more. The particle size of the primary particles may be in a range of about 100 nm or less, about 90 nm or less, about 80 nm or less, about 70 nm or less, about 60 nm or less, about 50 nm or less, about 40 nm or less, or about 30 nm or less. For example, the particle diameter of the primary particles may be in a range of about 20 nm to about 50 nm.

For example, the particle size of the secondary particles may be in a range of about 0.1 $\mu$m or more, about 0.5 $\mu$m or more, about 1 $\mu$m or more, about 3 $\mu$m or more, about 5 $\mu$m or more, about 7 $\mu$m or more, about 10 $\mu$m or more, or about 15 $\mu$m or more. The particle size of the secondary particles may be in a range of about 20 $\mu$m or less, about 15 $\mu$m or less, about 10 $\mu$m or less, about 7 $\mu$m or less, about 5 $\mu$m or less, or about 3 $\mu$m or less. For example, the particle diameter of the secondary particles may be in a range of about 0.1 $\mu$m to about 2 $\mu$m.

A shape of the primary particles may be substantially sphere-shaped, elliptical sphere-shaped, plate-shaped, or a combination thereof. For example, the shape of the primary particles may be substantially sphere-shaped, elliptical sphere-shaped, or a combination thereof.

A Brunauer-Emmett-Teller (BET) specific surface area of the carbon material CBM may be in a range of about 10 m$^2$/g to about 200 m$^2$/g. For example, The BET specific surface area of the carbon material CBM may be about 20 m$^2$/g to about 150 m$^2$/g, about 30 m$^2$/g to about 100 m$^2$/g, about 40 m$^2$/g to about 100 m$^2$/g, or about 40 m$^2$/g to about 80 m$^2$/g. When the BET specific surface area of the carbon material CBM satisfies the above range, lithium ions may not be trapped inside the carbon material CBM, and lithium ions may smoothly pass through the carbon material CBM.

An amount of the carbon material CBM may be in a range of about 40 wt% to about 98 wt%, about 40 wt% to about 90 wt%, about 40 wt% to about 85 wt%, about 40 wt% to 80 wt%, about 50 wt% to about 80 wt%, or about 60 wt% to about 80 wt% relative to the total weight of the coating layer. When the amount of the carbon material CBM satisfies the above range, lithium ions released from the positive electrode active material may move toward the negative electrode layer 200 during charging of the all-solid-state battery, and thus a lithium metal layer may be formed substantially between the negative electrode current collector 210 and the coating layer 220.

The metal MET may include at least one of gold (Au), platinum (Pt), palladium (Pd), silicon (Si), silver (Ag), aluminum (Al), magnesium (Mg), germanium (Ge), copper (Cu), indium (In), nickel (Ni), bismuth (Bi), tin (Sn), zinc (Zn), or a combination thereof. The metal MET may improve electrical conductivity of the negative electrode layer 200. For example, the metal MET may form an alloy with lithium and form a lithium metal layer under the coating layer 220.

For example, the metal MET may be in the form of particles. The metal MET may be or include a nanoparticle. An average particle diameter of the metal MET may be in a range of, for example, about 5 nm to about 80 nm, and any metal nanoparticle having a nano-size may be used as desired. A crystallite size of the metal MET may be in a range of about 30 nm to about 60 nm, or about 50 nm to about 60 nm. For example, the crystallite size may be analyzed using X-ray diffraction analysis (XRD). When the average particle diameter and the crystallite size of the metal MET satisfy the above ranges, the current density in the coating layer 220 may be substantially uniform, and life characteristics of the all-solid-state battery may be further improved. When the average particle diameter of the metal MET increases in micrometer, uniformity of the metal MET in the coating layer 220 decreases, causing an increase in current density in specific regions and a deterioration in cycle life characteristics.

The amount of the metal MET may be less than the amount of the carbon material CBM.

The amount of metal MET may be in a range of about 1 wt% to about 40 wt%, about 3 wt% to about 40 wt%, about 5 wt% to about 35 wt%, about 5 wt% to about 30 wt%, about 10 wt% to about 30 wt%, or about 10 wt% to about 25 wt% relative to the total weight of the coating layer 220. When the amount of the metal MET satisfies the above range, lithium ions released from the positive electrode active material may move toward the negative electrode layer 200 during charging of the all-solid-state battery, and thus a lithium metal layer may be formed substantially between the negative electrode current collector 210 and the coating layer 220. When lithium precipitation occurs on a surface of the negative electrode layer 200, it may be possible to effectively reduce or suppress electrode short-circuit, and reduce or suppress a disadvantage caused by side reactions with an electrolyte.

The dielectric material DET may be electrochemically stable material during the charge and discharge process of an all-solid-state battery. The dielectric material DET may be or include a material that does not form an alloy or compound with lithium. The dielectric material DET does not participate in the chemical reaction of the battery, so there may be no change in morphology within the coating layer 220.

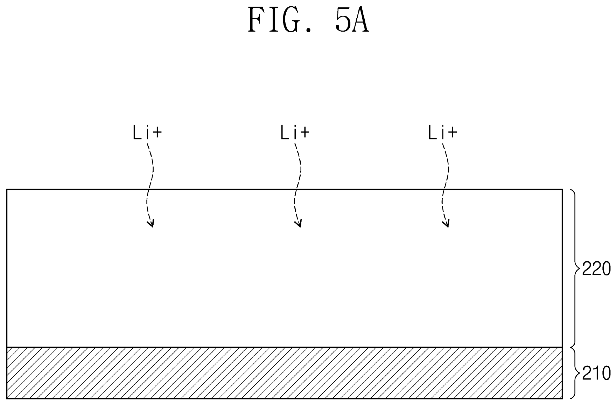

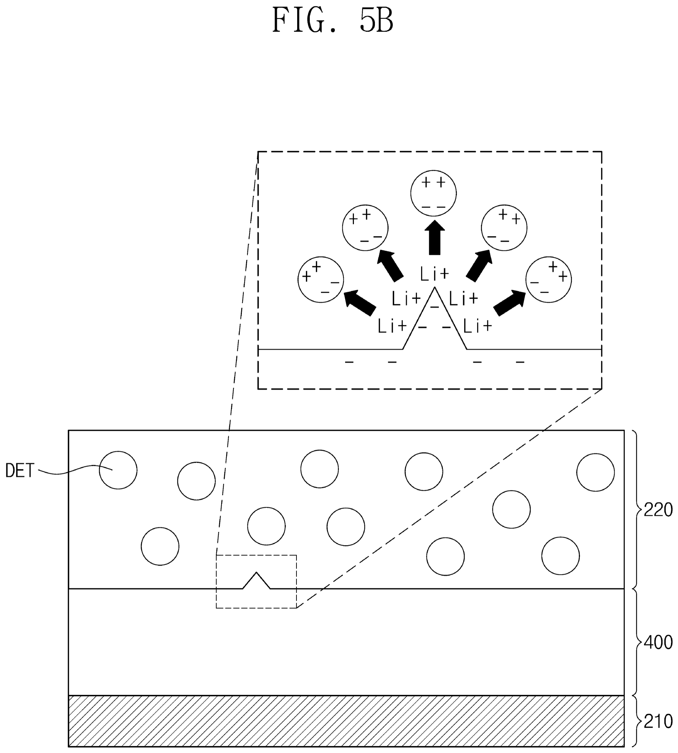

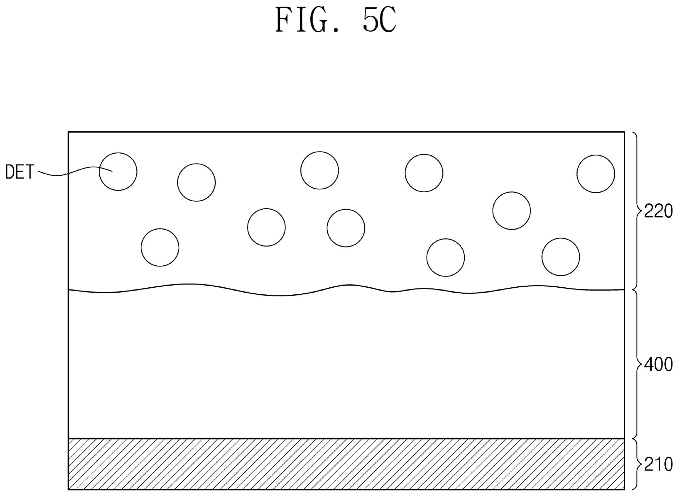

The dielectric material DET may have spontaneous polarization properties with internally aligned electric dipoles even without an external electric field. According to an example embodiment of the present disclosure, the coating layer 220 may include the dielectric material DET, thereby alleviating an imbalance in current density. For example, the dielectric material DET is polarized in a direction of relaxing a local electric field formed in a partial region (e.g., a surface of the negative electrode current collector 210 or the lithium metal layer) during charging and discharging of the battery. Thus, a uniform current density may be formed within the coating layer 220, by dispersing a concentrated current density in certain regions. As a result, the lithium metal layer may be induced to form uniformly, and a formation and growth of lithium dendrites may be reduced or suppressed. A detailed description thereof is given below with reference to FIGS. 5A to 5C.

In addition, the dielectric material DET may have an attractive interaction with lithium ions. For example, the attractive interaction may include an electrostatic interaction. Here, the electrostatic interaction may refer to an interaction that occurs through electrostatic attraction between a positive charge and a negative charge. Therefore, when the coating layer 220 includes the dielectric material DET, the dielectric material DET electromagnetically induces lithium ions in a path through which the lithium ions may move, so that lithium ions mobility can be improved. Thereby, lithium ions flux in the coating layer 220 may be more uniformly induced, and lithium ions may be substantially evenly dispersed and moved to be substantially uniformly deposited and precipitated on the negative electrode current collector 210. As a result, cell performance of the all-solid-state battery may be further improved.

In other words, since the coating layer 220 includes the dielectric material DET, lithium ions mobility within the coating layer 220 may be enhanced, and lithium deposition uniformity may be improved. Thus, overvoltage is reduced or prevented due to local lithium precipitation, and a growth of lithium dendrites is more effectively reduced or suppressed. As a result, short-circuit and capacity degradation of the all-solid-state battery due to lithium dendrites may be reduced or prevented, and high-rate characteristics and cycle-life characteristics may be further improved.

The effect of including the dielectric material DET may be obtained when applied to the coating layer 220 including the carbon material CBM and the metal MET together. On the other hand, when the dielectric material DET is included in the coating layer 220 that includes only the metal MET or only the carbon material CBM, a short circuit may occur during charge and discharge. Additionally, lithium metal may not be substantially formed between the negative electrode current collector 210 and the coating layer 220, but instead may be formed on the upper part of the coating layer 220.

The dielectric constant ($\varepsilon$) of the dielectric material DET may be in a range of about 10 to about $10^4$. For example, the dielectric constant ($\varepsilon$) of the dielectric material DET may be about 10 to about $10^3$, about 10 to about $10^2$, about $10^2$ to about $10^4$, or about $10^3$ to about $10^4$. When the dielectric constant ($\varepsilon$) of the dielectric material DET is outside the above range, polarization characteristics of the dielectric material DET may deteriorate, making it challenging to improve lithium ions mobility and achieve an effect of forming a uniform electric field.

The dielectric constant ($\varepsilon$) of the dielectric material DET is a physical parameter that represents an influence of a material on an electric field, which may indicate an amount of electric charge the dielectric material DET may store. A larger dielectric constant may indicate a greater degree of polarization with changing electric field.

The dielectric constant ($\varepsilon$) of the dielectric material DET may be measured using a static capacitance measurement, impedance spectroscopy, or a resonance method. For example, the dielectric constant ($\varepsilon$) of the dielectric material DET may be measured according to ASTM D150 by setting the frequency in a range of about 1 Hz to about 1 MHz using an impedance analyzer.

For example, the dielectric material DET satisfying the above dielectric constant ($\varepsilon$) may include at least one of $BaTiO_3$, $BaSrTiO_3$, $Pb(Zr, Ti)O_3$, $(Pb, La)(Zr, Ti)O_3$, $Pb(Zr, Ti, Nb)O_3$, $SrBi_2Ta_2O_9$, $(K, Na)NbO_3$, $KNbO_3$, $KTaO_3$, $(Na, Bi)TiO_3$, $BiFeO_3$, or a combination thereof. In an example embodiment, the dielectric material DET may include $BaTiO_3$. The type of the dielectric material DET is not particularly limited, and any dielectric material can be used as long as the dielectric material enhances movement of lithium ions through polarization characteristics and reduces or suppresses lithium dendrites formation by enabling uniform lithium deposition.

An average particle diameter of the dielectric material DET may be different from the average particle diameter of the carbon material CBM. For example, the average particle diameter of the dielectric material DET may be smaller than the average particle diameter of the carbon materials CBM. For example, the average particle diameter of the dielectric material DET may be larger than the average particle diameter of the carbon material CBM.

The average particle diameter of the dielectric material DET may be in a range of about 10 nm to about 3 $\mu$m. For example, the average particle diameter of the dielectric material DET may be about 10 nm to about 2 $\mu$m, about 10 nm to about 1 $\mu$m, about 50 nm to about 1 $\mu$m, or about 50 nm to about 0.5 $\mu$m.

When the average particle diameter of the dielectric material DET is less than the above range, the dielectric constant ($\varepsilon$) may decrease, thereby reducing the effectiveness of including the dielectric DET. When the average particle diameter of the dielectric material DET exceeds the above range, surface area interacting with lithium ions may decrease, thereby limiting the dielectric material DET from properly performing the function thereof. In addition, the dielectric material DET may not be uniformly distributed within the coating layer 220, causing an increase in current density in specific regions, which may result in non-uniform lithium electrodeposition during the charging and discharging process.

In this description, the average particle diameter may be measured using an electron microscope such as, e.g., a scanning electron microscope (SEM), a field emission scanning electron microscope (FE-SEM), or a transmission electron microscope (TEM), or may be measured using a particle size analyzer. For example, the average particle diameter of the dielectric material DET may be obtained by randomly or non-systematically selecting approximately 20 dielectric material particles from an electron microscope image of the coating layer 220, measuring the size (diameter or a long axis length) and calculating an arithmetic mean. For example, the average particle diameter may be defined as the particle size at which a cumulative volume of 50 vol% in a particle size distribution obtained using a particle size analyzer, that is, D50 value may be taken as the average particle diameter of the dielectric material DET.

An amount of the dielectric material DET may be less than the amount of the metal MET.

The amount of the dielectric material DET may be in a range of about 1 wt% to 10 wt%, about 1 wt% to about 9 wt%, about 2 wt% to about 8 wt%, about 3 wt% to about 6 wt%, or about 3 wt% to about 5 wt% relative to the total weight of the coating layer 220.

When the amount of the dielectric material DET is less than the above range, the effectiveness of local electric field relaxation effect and lithium dendrites growth reduction or suppression due to the inclusion of the dielectric material DET may not be sufficiently achieved. Therefore, the improvement in life characteristics and performance of the all-solid-state battery may be insignificant. When the amount of the dielectric material DET exceeds the above range, the dielectric material DET may constitute an electrical and physical resistor to movement (conduction or diffusion) of lithium ions in the coating layer 220, thereby deteriorating of life characteristics and performance of the all-solid-state battery.

That is, when the amount of the dielectric material DET satisfies the above range, lithium ions may substantially evenly disperse and move in the coating layer 220 in the process of moving from the solid electrolyte layer toward the negative electrode layer 200 during charging of the battery, and substantially uniformly deposit and precipitate on the negative electrode current collector 210. In addition, lithium ions mobility may be further improved by the interaction between the dielectric material DET and the lithium ions. Accordingly, the lithium metal layer is substantially uniformly formed, thereby effectively reducing or suppressing the formation of lithium dendrites. As a result, an all-solid-state battery having improved high rate characteristics and cycle-life characteristics may be provided.

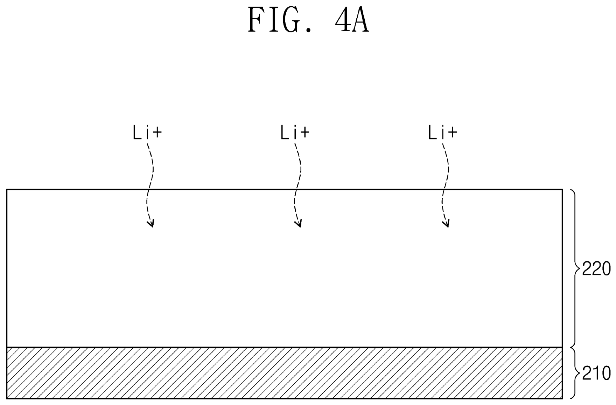

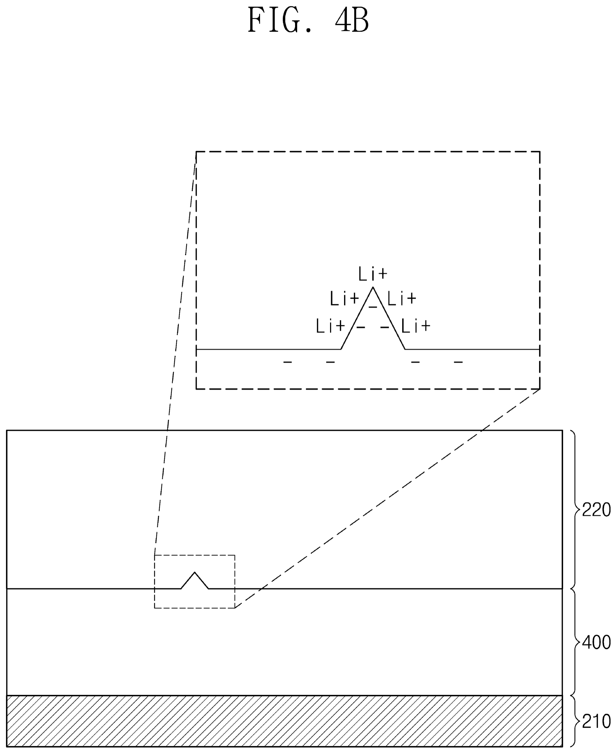

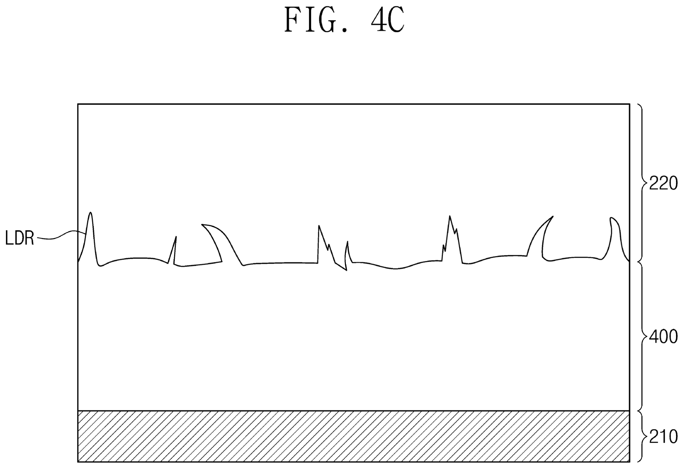

FIGS. 4A to 4C are views for explaining a negative electrode for an all-solid-state battery according to a comparative example of the present disclosure. Hereinafter, for convenience of description, description of the same matters as those described above with reference to FIG. 3 is omitted, and differences are described in detail.

Referring to FIGS. 4A-4C, a coating layer 220 according to a comparative example of the present disclosure may not include the dielectric material. When the coating layer 220 does not include the dielectric material, non-uniform precipitation of lithium may occur in some regions of a surface of the negative electrode current collector 210 to form lithium dendrites LDR as charge and discharge cycles are repeated.

For example, an initially grown dendrite tip in a form of a sharp protrusion may be formed by non-uniform precipitation of lithium during charge of the all-solid-state battery. Electrons move around the dendrite tip thus formed, causing lithium ions released from the positive electrode active material to concentrate around the dendritic tip.

In other words, since a region around the dendrite tip exhibits a strong electric field compared to a flat region of the lithium metal layer 400, lithium ions may be, for example, electrochemically reduced in this region. As a result, non-uniform lithium metal deposition may be continuously induced, leading to a growth of lithium dendrite.

The growth of lithium dendrites may cause a short-circuit between the positive electrode and negative electrode, and a formation of inactive lithium (dead lithium), which may result in stability issues of the all-solid-state battery, and degrade its capacity and cycle-life characteristics.

FIGS. 5A to 5C are diagrams for explaining a negative electrode for an all-solid-state battery according to example embodiments of the present disclosure. Hereinafter, for convenience of description, description of the same matters as the matters described above with reference to FIG. 3 is omitted, and differences are described in detail.

Referring to FIGS. 5A-5C, as described above, the dendrite tip may be formed by non-uniform precipitation of lithium during charge of an all-solid-state battery. A local lithium ion concentration gradient may occur around such dendrite tips, which may result in an imbalance in the electric field.

The coating layer 220 according to the example embodiments of the present disclosure may include the dielectric material DET, so that the formation and growth of lithium dendrites may be reduced or suppressed by the polarization property of the dielectric material DET even when the charge-discharge cycle is repeated. As a result, the cycle-life characteristics of the all-solid-state battery may be further improved.

For example, the dielectric material DET may be dispersed within the coating layer 220. The dielectric material DET may undergo dipole rearrangement and become polarized due to the strong electric field formed around the dendrite tip. For example, since positively charged lithium ions concentrate around the dendrite tip, the dipoles of the dielectric material DET align in a direction that mitigates electric field imbalance (i.e., mitigates electric field strength) around the dendritic tip.

Accordingly, electrostatic attraction may occur between the dielectric material DET and the lithium ions. The dielectric material DET may attract the lithium ions, thereby reducing or preventing their approaching and reduction near the dendrite tip. As a result, the lithium metal layer 400 may be substantially uniformly formed, which effectively reduces or suppresses the formation and growth of lithium dendrites.

Since the dielectric material DET with polarization characteristics is substantially uniformly dispersed within the coating layer 220, it may be possible to induce lithium ions to be electrostatically attracted in a path in which the lithium ions move, thereby further improving lithium ions mobility. As a result, the high rate characteristics of the all-solid-state battery may be further improved. In addition, a uniform lithium ion flux may be formed within the coating layer 220, thereby inducing uniform lithium metal deposition on the negative electrode current collector 210.

Referring back to FIG. 3, the coating layer 220 may further include a binder.

The binder may include a first binder BND1 and a second binder BND2. The first binder BND1 and the second binder BND2 may be the same, or may be different from each other. For example, the first binder BND1 and the second binder BND2 may be different from each other.

When the coating layer 220 may further include the binder, an amount of the binder may be in a range of about 1 wt% to about 15 wt% relative to the total weight of the coating layer 220. For example, the amount of the binder may be about 1 wt% to about 12 wt%, about 1 wt% to about 10 wt%, about 3 wt% to about 10 wt%, or about 3 wt% to about 9 wt% relative to the total weight of the coating layer 220.

The first binder BND1 may include at least one of an acrylate-based binder, a polyvinylidene fluoride-based binder, a polyvinyl pyrrolidone-based binder, a polyvinyl alcohol-based binder, a cellulose-based binder, or a combination thereof. For example, the first binder BND1 may include a cellulose-based binder.

For example, the acrylate-based binder may include at least one of polyacrylic acid (PAA), polymethyl methacrylate, polyisobutyl methacrylate, polyethyl acrylate, polybutyl acrylate, poly(2-ethylhexyl acrylate), or a combination thereof.

For example, the polyvinylidene fluoride-based binder may include at least one of polyvinylidene fluoride (PVDF), polyvinylidene fluoride-co-hexafluoropropylene, polyvinylidene fluoride-co-trichloroethylene, polyvinylidene fluoride-co-tetrafluoroethylene, polyvinylidene fluoride-co-trifluoroethylene, polyvinylidene fluoride-co-trifluorochloroethylene, polyvinylidene fluoride-co-ethylene fluoride-hexafluoropropylene, polyvinylidene fluoride-co-trichloroethylene, or a combination thereof.

For example, the polyvinyl pyrrolidone-based binder may include polyvinyl pyrrolidone.

For example, the polyvinyl alcohol-based binder may include polyvinyl alcohol.

For example, the cellulose-based binder may include at least one of carboxymethyl cellulose (CMC), methyl cellulose (MC), hydroxypropyl cellulose (HPC), methyl hydroxypropyl cellulose (MHPC), ethyl hydroxyethyl cellulose (EHEC), methyl ethyl hydroxyethyl cellulose (MEHEC), cellulose gum, or a combination thereof. In an example embodiment, the first binder BND1 may include carboxymethyl cellulose (CMC).

The first binder BND1 may be in contact with components (such as the carbon material CBM, the metal MET, and the dielectric material DET) constituting the coating layer 220. Since the first binder BND1 exhibits a desired or improved phase separation property, the components may be substantially uniformly dispersed within the coating layer 220.

The second binder BND2 may include at least one of a rubber-based binder, an imide-based binder, a nitrile-based binder, an acetate-based binder, a cyano-based binder, or a combination thereof. For example, the second binder BND2 may include a rubber-based binder.

For example, the rubber-based binder may include at least one of styrene-butadiene rubber (SBR), nitrile-butadiene rubber (NBR), or a combination thereof. In an example embodiment, the second binder BND2 may include a styrene-butadiene rubber.

For example, the imide-based binder may include at least one of polyimide, polyamide imide, or a combination thereof.

For example, the nitrile-based binder may include at least one of polyacrylonitrile, an acrylonitrile styrene-butadiene copolymer, or a combination thereof.

For example, the acetate-based binder may include at least one of polyvinyl acetate, ethylene-co-vinyl acetate, cellulose acetate, cellulose acetate butyrate, cellulose acetate propionate, or a combination thereof.

For example, the cyano-based binder may include cyanoethyl sucrose.

The second binder BND2 may be in contact with components (such as the carbon material CBM, the metal MET, and the dielectric material DET) constituting the coating layer 220. Since the second binder BND2 exhibits a desired or improved adhesiveness, the adhesion of the coating layer 220 may be improved, and the components may be substantially uniformly dispersed within the coating layer 220.

The weight ratio of the first binder BND1 and the second binder BND2 may be in a range of about 1:1 to about 1:5. For example, the weight ratio of the first binder BND1 and the second binder BND2 may be about 1:1 to about 1:4, or about 1:1 to about 1:3. When the weight ratio of the first and second binders BND1 and BND2 satisfies the above range, it may be possible to achieve stable dispersion of the constituent components in the coating layer 220, while also ensuring desired or improved adhesion to the negative electrode current collector 210.

The coating layer 220 may have a smaller thickness than the positive electrode active material layer. The thickness of the coating layer 220 may be in a range of, for example, about 50% or less, about 40% or less, about 30% or less, about 20% or less, about 10% or less, or about 5% or less of the thickness of the positive electrode active material layer. The thickness of the coating layer 220 may be in a range of, for example, about 1 $\mu$m to about 20 $\mu$m, about 5 $\mu$m to about 20 $\mu$m, or about 5 $\mu$m to about 10 $\mu$m.

When the thickness of the coating layer 220 is excessively thin, e.g., less than about 1 $\mu$m, lithium dendrites formed between the coating layer 220 and the negative electrode current collector 210 may collapse the coating layer 220, resulting in deterioration in cycle characteristics of the all-solid-state battery. When the thickness of the coating layer 220 is excessively large, e.g., more than about 20 $\mu$m the energy density of the all-solid-state battery may decrease, and internal resistance caused by the coating layer 220 may increase, thereby deteriorating cycle characteristics of the all-solid-state battery.

The coating layer 220 may further include an additive. The additive may include, for example, at least one of a filler, a coating agent, a dispersant, and an ion conductivity agent, or a combination thereof.

Hereinafter, the present disclosure is described in more detail with reference to Examples. However, these examples are intended to illustrate examples of the present disclosure, and the scope of the present disclosure is not limited to these examples.

## Example 1

Manufacture of Negative Electrode:

A mixture was prepared by mixing 74 wt% of carbon black (average particle diameter (D50): 35 nm), 25 wt% of Ag (average particle diameter (D50): 60 nm), and 1 wt% of $BaTiO_3$ (average particle diameter (D50): 100 nm, dielectric constant: 1100).

A coating layer slurry was prepared by mixing 91.7 wt% of the mixture, 2.8 wt% of carboxymethyl cellulose, and 5.5 wt% of styrene-butadiene rubber in distilled water as a solvent.

The prepared coating layer slurry was coated on a stainless steel foil current collector with a thickness of about 10 μm and then vacuum dried at 80 °C to form a negative electrode layer having a coating layer with a thickness of about 9 μm.

Manufacture of Positive Electrode Layer:

A mixture was prepared by mixing a positive electrode active material $LiNi_{0.9}Mn_{0.05}Co_{0.05}O_2$, an argyrodite-type solid electrolyte $Li_6PS_5Cl$, a conductive material carbon nanofiber, and a binder polytetrafluoroethylene at a weight ratio of 85:15:3:1.5.

The prepared mixture was coated on an aluminum foil current collector with a thickness of about 10 μm, and then vacuum dried at 45 °C to form a positive electrode layer. A thickness of the positive electrode active material layer was about 160 μm.

Manufacture of Solid Electrolyte Layer:

An octyl acetate binder solution containing butyl acrylate which is an acrylate-based polymer, was added to the argyrodite-type solid electrolyte $Li_6PS_5Cl$ and mixed. At this time, the solid electrolyte and the binder were mixed at a weight ratio of 98.5:1.5.

The mixing step was performed using a Thinky mixer. The obtained mixture was supplemented with 2 mm zirconia balls and further stirred using a Thinky mixer to prepare a slurry. The slurry was cast onto a release nonwoven fabric and dried in a convection oven at 80 °C for 10 minutes to form a solid electrolyte layer. A thickness of the solid electrolyte layer was about 100 μm.

Manufacture of All-Solid-State Battery:

The manufactured negative electrode, the solid electrolyte layer and the positive electrode layer were sequentially laminated, and a pressure of 2 Mpa was applied to manufacture an all-solid-state battery.

## Example 2

A negative electrode and an all-solid-state battery were manufactured in the same manner as in Example 1, with a difference that 72 wt% of carbon black, 25 wt% of Ag, and 3 wt% of $BaTiO_3$ were mixed to prepare a mixture.

## Example 3

A negative electrode and an all-solid-state battery were manufactured in the same manner as in Example 1, with a difference that 70 wt% of carbon black, 25 wt% of Ag, and 5 wt% of $BaTiO_3$ were mixed to prepare a mixture.

## Example 4

A negative electrode and an all-solid-state battery were manufactured in the same manner as in Example 1, with a difference that 65 wt% of carbon black, 25 wt% of Ag, and 10 wt% of $BaTiO_3$ were mixed to prepare a mixture.

## Comparative Example 1

A negative electrode and an all-solid-state battery were manufactured in the same manner as in Example 1, with a difference that 75 wt% of carbon black and 25 wt% of Ag were mixed to prepare a mixture.

## Comparative Example 2

A negative electrode and an all-solid-state battery were manufactured in the same manner as in Example 1, with a difference that 25 wt% of carbon black, 25 wt of Ag, and 50 wt% of $BaTiO_3$ were mixed to prepare a mixture.

## Evaluation Example 1: EDS Analysis of Cross-section and Surface of Negative Electrode

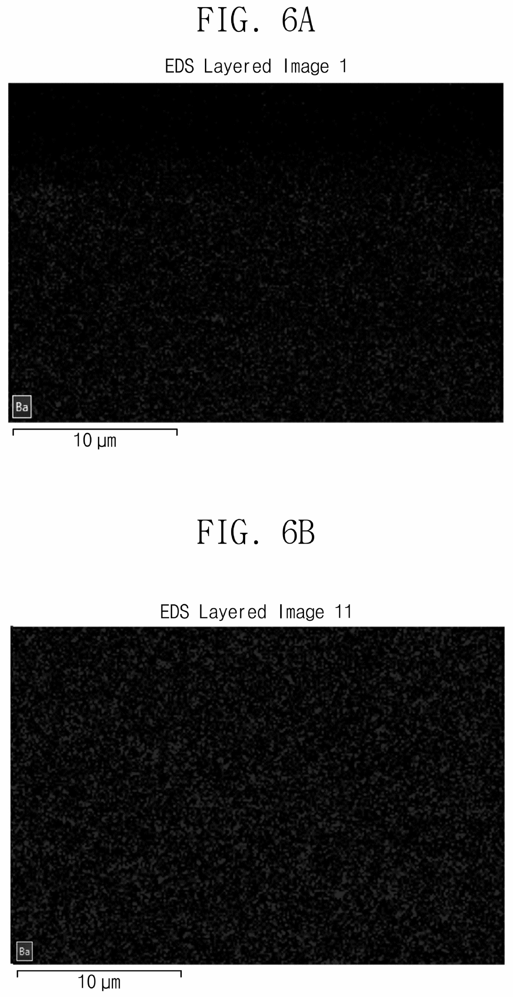

Cross section and surface of the negative electrodes of Examples 2 and 3 were analyzed using energy dispersive spectroscopy (EDS). The results are shown in FIGS. 6A to 7B.
FIGS. 6A and 6B are each images showing EDS mapping results for a cross section and a surface of the negative electrode for the all-solid-state battery of Example 2.

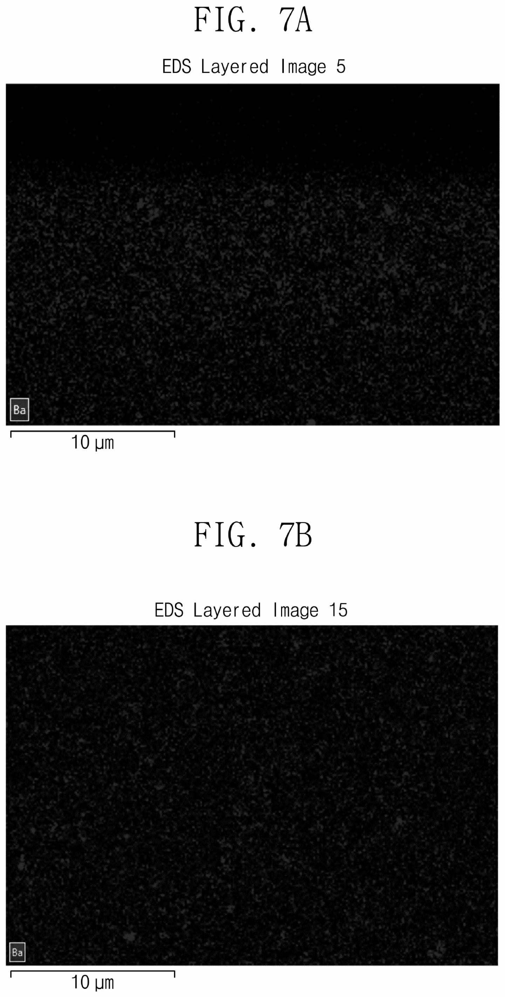

FIGS. 7A and 7B are each images showing EDS mapping results for a cross section and a surface of the negative electrode for the all-solid-state battery of Example 3.
Referring to FIGS. 6A to 7B, in the case of the negative electrodes of Examples 2 and 3, it can be confirmed that barium (Ba) is evenly dispersed within the coating layer.

## Evaluation Example 2: Evaluation of Rate Characteristics

The all-solid-state batteries produced according to Examples 1 to 4 and Comparative Examples 1 and 2 were charged to an upper limit voltage of 4.25 V at a constant current of 0.1 C, and then discharged to a discharge cut-off voltage of 2.5 V at a constant voltage of 1 C. The discharge rate characteristics were calculated according to the following Equation 1. The results are shown in Table 1 below.

Discharge Rate Characteristics (%) = (discharge capacity at 1.0 C-rate / discharge capacity at 0.1 C-rate) $\times$ 100.          Equation 1:

## Evaluation Example 3: Cycle-Life Characteristics Evaluation

The cycle life characteristics of the all-solid-state batteries manufactured according to Examples 1 to 4 and Comparative Examples 1 and 2 were measured as follows.
The first cycle was charging at a constant current of 0.33 C for about 3 hours until the cell voltage was 4.25 V and at a constant voltage at 4.25 V until the current was 0.1 C, followed by a 10 minute rest time, after which discharging at a constant current at 0.33 C was performed for about 3 hours till the cell voltage was 2.5 V and a 10 minutes rest time. After the second cycle, charging and discharging were carried out up to 200 cycles under the same conditions as in the first cycle.
The capacity retention rate was calculated according to the following Equation 2. The results are shown in Table 1 below.

Capacity Retention Rate (%) = (discharge capacity in 200th cycle / discharge capacity in 1st cycle) $\times$ 100.          Equation 2:

Table 1:

| Distinction | Coating Layer Amount (wt%)* | | | Discharge Rate Characteristics (%, 1.0C / 0.1C) | Capacity Retention Rate (%) |
|---|---|---|---|---|---|
| | Carbon Material | Metal | Dielectric Material | | |
| Example 1 | 74 | 25 | 1 | 78.71 | 72.35 |
| Example 2 | 72 | 25 | 3 | 81.32 | 76.95 |
| Example 3 | 70 | 25 | 5 | 80.29 | 75.68 |
| Example 4 | 65 | 25 | 10 | 78.37 | 70.16 |
| Comparative Example 1 | 75 | 25 | 0 | 75.64 | 67.42 |

(continued)

| Distinction | Coating Layer Amount (wt%)* | | | Discharge Rate Characteristics (%, 1.0C / 0.1C) | Capacity Retention Rate (%) |
|---|---|---|---|---|---|
| | Carbon Material | Metal | Dielectric Material | | |
| Comparative Example 2 | 25 | 25 | 50 | 18.85 | - |
| * An amount of the coating layer is based on the total weight of the coating layer (carbon material + metal + dielectric material) excluding the binder. | | | | | |

Referring to Table 1, it can be confirmed that the all-solid-state batteries according to Examples 1 to 4 have desired or improved rate characteristics and capacity retention rate as compared with the all-solid-state batteries according to Comparative Examples 1 and 2.

A negative electrode for an all-solid-state battery according to an example embodiment of the present disclosure may include a coating layer including a dielectric material. Thereby, it is possible to induce the lithium metal layer to be uniformly formed by the polarization property of the dielectric material, and to reduce or suppress the growth of the lithium dendrite. As a result, the life characteristics of the all-solid-state battery can be further improved.

While the present disclosure has been described with reference to example embodiments, it should be understood that these example embodiments are provided for illustrative purposes only and do not limit the scope of the present disclosure. Various modifications and equivalent arrangements may be made without departing from the spirit and scope of the appended claims. Accordingly, the described embodiments should be regarded as examples rather than limitations of the present disclosure.

## Claims

1.    A negative electrode for an all-solid-state battery (10), the negative electrode comprising:

   a negative electrode current collector (210); and
   a coating layer (220) on the negative electrode current collector (210),
   wherein the coating layer (220) comprises a carbon material (CBM), a metal (MET), and a dielectric material (DET),
   wherein in the coating layer (220) a weight amount of the metal (MET) is less than a weight amount of the carbon material (CBM),
   wherein in the coating layer (220) a weight amount of the dielectric material (DET) is less than the weight amount of the metal (MET), and
   wherein in the coating layer (220) the amount of the dielectric material (DET) is in a range of 1 wt% to 10 wt% relative to a total weight of the coating layer (220).

2.    The negative electrode as claimed in claim 1, wherein the carbon material (CBM) comprises at least one of amorphous carbon, crystalline carbon, and a combination thereof, and
   wherein the metal (MET) comprises at least one of gold (Au), indium (In), germanium (Ge), platinum (Pt), palladium (Pd), silicon (Si), silver (Ag), aluminum (Al), magnesium (Mg), copper (Cu), nickel (Ni), bismuth (Bi), tin (Sn), zinc (Zn), and a combination thereof.

3.    The negative electrode as claimed in any of claims 1 or 2, wherein the dielectric material (DET) comprises at least one of $BaTiO_3$, $BaSrTiO_3$, $Pb (Zr,Ti)O_3$, $(Pb,La) (Zr, Ti)O_3$, $Pb(Zr, Ti, Nb)O_3$, $SrBi_2Ta_2O_9$, $(K, Na)NbO_3$, $KNbO_3$, $KTaO_3$, $(Na, Bi)TiO_3$, $BiFeO_3$, and a combination thereof.

4.    The negative electrode as claimed in any of claims 1 or 2, wherein the dielectric material comprises $BaTiO_3$.

5.    The negative electrode as claimed in any of claims 1 to 4, wherein a dielectric constant ($\varepsilon$) of the dielectric material (DET) is in a range of 10 to $10^4$.

6.    The negative electrode as claimed in any of claims 1 to 5, wherein an average particle diameter of the dielectric material (DET) is in a range of 10 nm to 3 $\mu$m, wherein the average particle diameter refers to the median particle size (D50), which corresponds to the diameter of particles at 50 vol% in a cumulative particle size distribution, the cumulative particle size distribution being determined by a laser scattering method.

7. The negative electrode as claimed in any of claims 1 to 6, wherein an amount of the dielectric material (DET) is in a range of 2 wt% to 8 wt% relative to the total weight of the coating layer (220).

8. The negative electrode as claimed in any of claims 1 to 7, wherein the coating layer (220) further comprises a binder (BND1, BND2), and
wherein an amount of the binder (BND1, BND2) is in a range of 1 wt% to 15 wt% relative to the total weight of the coating layer (220).

9. The negative electrode as claimed in claim 8, wherein the binder (BND1, BND2) further comprises a first binder (BND1) and a second binder (BND2), and
wherein the first binder (BND1) and the second binder (BND2) are different from each other.

10. The negative electrode as claimed in claim 9, wherein the first binder (BND1) comprises at least one of an acrylate-based binder, a polyvinylidene fluoride-based binder, a polyvinyl pyrrolidone-based binder, a polyvinyl alcohol-based binder, a cellulose-based binder, and a combination thereof, and
wherein the second binder (BND2) comprises at least one of a rubber-based binder, an imide-based binder, a nitrile-based binder, an acetate-based binder, a cyano-based binder, and a combination thereof.

11. The negative electrode as claimed in any of claims 1 to 10, wherein the negative electrode is configured as layer (200).

12. An all-solid-state battery (10) comprising:

a positive electrode layer (100);
the negative electrode layer (200); and
a solid electrolyte layer (300) between the positive electrode layer (100) and the negative electrode layer (200), and
wherein the negative electrode layer (200) includes a negative electrode as claimed in any of claims 1 to 11.

# FIG. 1

# FIG. 2

# FIG. 3

M

DET    CBM    MET    BND1    BND2

220

210

# FIG. 4A

Li+          Li+              Li+

220

210

# FIG. 4B

# FIG. 4C

# FIG. 5A

# FIG. 5B

DET

220

400

210

# FIG. 5C

DET

220

400

210

# FIG. 6A

EDS Layered Image 1

10 μm

# FIG. 6B

EDS Layered Image 11

10 μm

# FIG. 7A

EDS Layered Image 5

10 μm

# FIG. 7B

EDS Layered Image 15

10 μm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020250013075